**Europäisches Patentamt**

**European Patent Office**

**Office européen des brevets**

(19)

(11) Numéro de publication: **0 244 297
B1**

# FASCICULE DE BREVET EUROPEEN

(12)

(45) Date de publication du fascicule du brevet:
**21.02.90**

(51) Int. Cl.⁵: **H 01 J 49/38, B 01 D 59/44**

(21) Numéro de dépôt: **87400880.8**

(22) Date de dépôt: **16.04.87**

(54) **Dispositif de séparation isotopique ou d'analyse de masses, par un champ magnétique.**

(30) Priorité: **18.04.86 FR 8605595**

(43) Date de publication de la demande:
**04.11.87 Bulletin 87/45**

(45) Mention de la délivrance du brevet:
**21.02.90 Bulletin 90/8**

(84) Etats contractants désignés:
**DE GB**

(56) Documents cités:
**WO-A-84/02803
US-A- 4 059 761**

(73) Titulaire: **COMMISSARIAT A L'ENERGIE ATOMIQUE,
31/33, rue de la Fédération, F-75015 Paris (FR)**

(72) Inventeur: **Gil, Christophe, 3, Chemin du Paradis,
F-91430 Igny (FR)**
Inventeur: **Gonella, Christian, 17, rue Moquebouteille la
Belle Etoile, F-91530 Saint Maurice Montcouronne (FR)**
Inventeur: **Louvet, Pierre, 30, rue Parmentier,
F-91120 Palaiseau (FR)**

(74) Mandataire: **Mongrédien, André et al, c/o
BREVATOME 25, rue de Ponthieu, F-75008 Paris (FR)**

ACTORUM AG

## Description

La présente invention concerne un dispositif de séparation isotopique ou d'analyse de masses, par un champ magnétique. Elle s'applique à la séparation isotopique des ions d'un mélange d'isotopes ou à l'analyse de masses.

On sait que le phénomène de résonance cyclotronique obtenu par effet électromagnétique, a d'abord été observé sur les électrons des premiers cyclotrons.

L'application de la résonance cyclotronique sur les ions des isotopes de l'uranium, pour l'enrichissement de l'un de ces isotopes, a été utilisée dans le cas du projet Manhattan. Les progrès rapides de la physique des plasmas ont incité à la reprise des recherches dès 1970 en France, puis aux Etats-Unis, où elles ont abouti à la construction, par la Société TRW, d'un dispositif de séparation isotopique par ce procédé avec un champ magnétique uniforme. Ce dispositif est décrit dans la revue «annales des mines» février-mars 1983, dans un article intitulé «La recherche et le développement de la séparation isotopique de l'uranium en France», pages 13 et 14. La séparation isotopique, grâce à ce type de dispositif qui s'étend longitudinalement est obtenue par le transfert d'énergie entre une onde électromagnétique et des ions.

Dans un procédé voisin, on accroît l'énergie perpendiculaire des ions grâce à l'effet de résonance observé, dans certaines conditions, quand les particules sont injectées dans un champ magnétique modulé périodiquement spatialement le long de l'axe du dispositif. Un tel processus est décrit notamment dans le «Journal de physique lettres» numéro 46, 15 août 1985, pages L745 à L749, dans un article intitulé «Chauffage de particules dans une structure magnétique périodique» (voir aussi US-A-4 059 761).

Il ressort de cet article que les particules décrivent une trajectoire en forme d'hélice dont le diamètre croît exponentiellement avec le temps. Des études expérimentales et théoriques montrent qu'une condition essentielle pour permettre un transfert d'énergie longitudinale (parallèle au champ axial) en énergie transversale, est une condition de résonance paramétrique donnée par la relation $V_{//o} = \Omega_{co} (\lambda_o/2\pi)$.

Dans cette relation:

— $\Omega_{co}$ désigne la pulsation cyclotronique des ions considérés (inverse du temps mis par un ion pour faire un tour complet soit 2 radians, sur sa trajectoire, dans un champ d'amplitude moyenne $B_o$).

— $V_{//o}$ désigne la vitesse moyenne des ions résonnants, parallèlement à la direction du champ magnétique de modulation (champ axial), ce champ ayant une amplitude moyenne $B_o$,

— $\lambda_o$ désigne la longueur d'onde de la modulation spatiale du champ magnétique dans une direction longitudinale (parallèle à l'axe du dispositif).

Dans une structure magnétique périodique, strictement régulière et de forme cylindrique, la forme du champ magnétique $B_z$ parallèlement à l'axe Z de cette structure s'écrit par exemple:

$$B_z = B_o (1 + \varepsilon \sin k_o \cdot z)$$

avec $k_o = 2 \pi / \lambda_o$.

Dans cette relation:

— $B_o$ désigne comme précédemment la composante moyenne du champ magnétique axial $B_z$,

— $\varepsilon$ désigne la demi-amplitude de la variation maximum de la composante du champ magnétique axial $B_z$, autour de l'amplitude moyenne $B_o$ de ce champ.

En effet lorsque $\sin k_o \cdot z = 1$, il est possible d'écrire:

$$B_{zmax} = B_o \cdot (1 + \varepsilon)$$

Au contraire, lorsque $\sin k_o \cdot z = -1$, la valeur minimale du champ magnétique axial peut s'écrire:

$$B_{zmin} = B_o \cdot (1 - \varepsilon)$$

Il en résulte que l'amplitude de la variation maximale de la composante du champ magnétique, autour de la composante moyenne $B_o$ de ce champ, a pour valeur:

$$\Delta B = B_{zmax} - B_{zmin} = 2 \varepsilon \cdot B_o$$

Ce type de structure magnétique est notamment celle qui est décrite dans le «Journal de physique lettres»; elle ne permet pas de séparer des isotopes tant que:

$$\Delta m/m < \Delta B/B_o = 2 \varepsilon \qquad (1)$$

Dans cette relation $\Delta m = m1 - m2$, représente la différence des masses $m1$ et $m2$ de deux isotopes d'un mélange; $m$ est la masse moyenne des deux isotopes du mélange telle que $m = (m1 + m2)/2$.

Tant que la relation (1) est satisfaite, le chauffage de l'isotope résonnant dans le champ magnétique est insuffisante pour espérer une séparation isotopique correcte.

La revue «Journal de physique lettres», montre que pour les ions résonnants qui décrivent une trajectoire en spirale, de rayon R dit «rayon de Larmor», il n'est en général pas tenu compte de la croissance du rayon de Larmor.

C'est par exemple le cas du dispositif décrit dans «Proceedings contributed papers», volume II, International conference on Plasma Physics, LAUSANNE, June 27, July 3, 1984, page 365. Ce dispositif comprend dans une enceinte étanche, de forme cylindrique et, le long de l'axe de cette enceinte, une source d'ions ou de plasmas et une structure magnétique régulière comportant plusieurs anneaux magnétiques espacés régulièrement le long de l'axe de l'enceinte.

Dans ce dispositif, comme les anneaux magnétiques sont espacés régulièrement le long de l'axe de l'enceinte, il n'est pas tenu compte de la croissance du rayon de Larmor et donc de la vitesse perpendiculaire initiale des ions. Il en résulte que ce dispositif qui en outre ne comporte pas de système de collection des ions ne peut être utilisé pour la séparation isotopique.

L'invention a pour but de remédier à ces inconvénients et notamment de réaliser un dispositif dans lequel l'ensemble magnétique est constitué par plusieurs anneaux magnétiques ou par un enroulement en spirale autour de l'axe de l'enceinte, la répartition des anneaux magnétiques ou l'espacement entre les spires de l'enroulement magnétique obéissant à une loi prédéterminée qui tient compte de la croissance du rayon de Larmor et de la vitesse intiale perpendiculaire des ions émis par la source. Ce dispositif permet ainsi d'obtenir une séparation isotopique correcte.

L'invention a pour objet un dispositif de séparation isotopique par un champ magnétique comportant une enceinte étanche et d'amont en aval d'un axe de cette enceinte, une source d'ions d'un mélange d'isotopes située dans l'enceinte, une grille accélératrice située dans l'enceinte en regard de la source en aval de celle-ci pour accélérer les ions provenant de cette source, un ensemble magnétique entourant l'enceinte pour la mise en résonance cyclotronique des ions de l'un des isotopes du mélange, cet ensemble magnétique étant situé sur le parcours des ions en aval de la grille accélératrice, cet ensemble magnétique comprenant plusieurs anneaux magnétiques identiques ou étant constitué par un enroulement de spires magnétiques en hélice cylindrique, ces anneaux ou cet enroulement ayant pour axe celui de l'enceinte, les ions mis en résonance cyclotronique parcourant des hélices circulaires définies par leur rayon de giration dit de Larmor, un ensemble de collection des ions résonnants situé dans l'enceinte, en aval de l'ensemble magnétique pour recueillir les ions résonnants issus de l'ensemble magnétique et une plaque collectrice dans l'enceinte, en aval de l'ensemble de collection et perpendiculaire à l'axe, pour recueillir les ions non résonnants qui n'ont pas été retenus par l'ensemble de collection, caractérisé en ce que le pas entre deux spires successives de l'hélice ou entre deux anneaux de l'ensemble magnétique est déterminé par la relation:

$$P(z) = \lambda_o \left[ 1 + (V_{\perp o}/V_{//o})^2 (1 - Ch^2 (\varepsilon \cdot k_o \cdot z/4)) \right]^{+1/2}$$

P(z) désigne le pas entre deux anneaux successifs ou deux spires successives entourant le point d'abscisse z sur l'axe de l'enceinte, l'origine des abscisses étant l'intersection de l'axe de l'enceinte avec un plan perpendiculaire à cet axe et délimitant l'ensemble magnétique à une extrémité de celui-ci, du côté de la source, $V_{\perp o}$ désigne une vitesse prédéterminée moyenne des ions résonnants dans une direction perpendiculaire à l'axe (z), $V_{//o}$ désigne une vitesse prédéterminée moyenne des ions résonnants dans une direction parallèle à l'axe de l'enceinte, ε la demi-amplitude de la variation maximum de la composante du champ magnétique parallèle à l'axe, autour de l'amplitude moyenne $B_o$ de ce champ, $k_o$ désigne une constante définie par la relation $k = \Omega_{co}/V_{//o}$, $\Omega_{co}$ étant la pulsation cyclotron des ions résonnants, $\lambda_o = 2\pi/k_o$ et Ch désigne le cosinus hyperbolique.

Selon une autre caractéristique, l'ensemble de collection des ions résonnants comporte des plaques parallèles à l'axe, deux plaques parallèles consécutives étant écartées d'une distance radiale voisine mais inférieure à deux fois le rayon de giration des ions résonnants issus de l'ensemble magnétique.

Selon une autre caractéristique, l'ensemble de collection des ions résonnants comporte des tubes cylindriques coaxiaux ayant le même axe que celui de l'enceinte, deux tubes consécutifs étant écartés d'une distance radiale voisine mais inférieure à deux fois le rayon de giration des ions résonnants issus de l'ensemble magnétique.

Selon une autre caractéristique, la longueur des plaques de l'ensemble de collection, dans la direction de l'axe, est voisine mais supérieure à $2\pi \cdot V_{//}/\Omega_{co}$, $V_{//}$ désignant la vitesse des ions résonnants issus de l'ensemble magnétique.

Selon une autre caractéristique, le dispositif comporte en outre une grille de freinage des ions résonnants, située entre l'ensemble magnétique et l'ensemble de collection des ions résonnants.

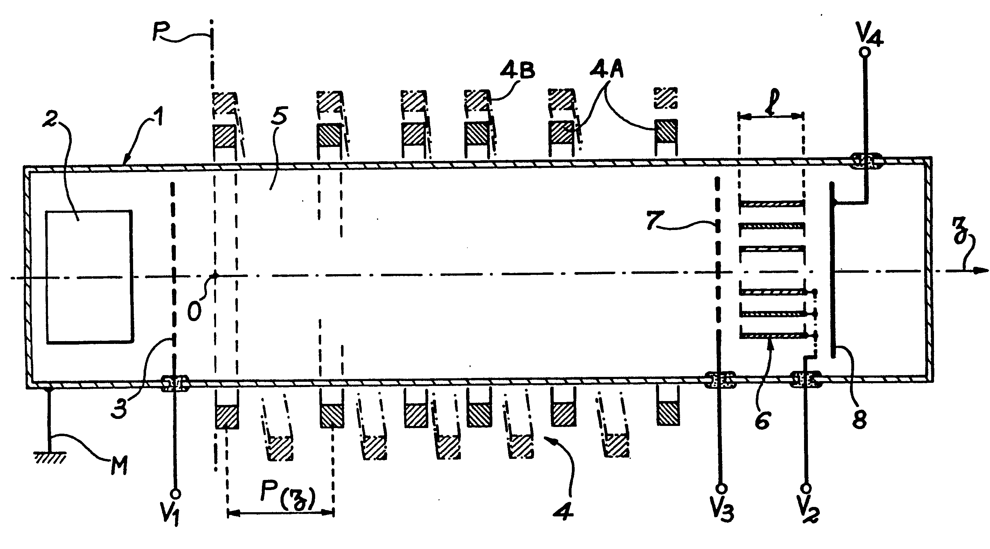

Les caractéristiques et avantages de l'invention ressortiront mieux de la figure annexée qui représente schématiquement et en coupe longitudinale, un dispositif de séparation isotopique par champ magnétique, conforme à l'invention.

Le dispositif représenté sur la figure comprend une enceinte étanche 1 de forme cylindrique par exemple et, d'amount en aval d'un axe z de cette enceinte, une source 2 d'ions ou de plasmas d'un mélange d'isotopes. La source 2 est située à l'intérieur de l'enceinte.

Le dispositif comprend aussi une grille accélératrice 3 des ions provenant de la source. Cette grille est située en regard de cette source, en aval de celle-ci, pour accélérer les ions provenant de la source. Elle est portée à un potentiel $V_1$ positif, par une source électrique non représentée, dans le cas où les ions issus de la source sont des ions négatifs. Réciproquement, cette grille est portée à un potentiel négatif si les ions issus de la source sont des ions positifs. L'enceinte 1 est portée au potentiel d'une masse de référence M.

Un ensemble magnétique 4 entoure l'enceinte. Cet ensemble permet, de façon connue, de mettre en résonance cyclotronique des ions de l'un des isotopes du mélange issu de la source 2. Cet ensemble est situé sur le parcours des ions, en aval de la grille accélératrice 3 et il entoure l'enceinte 1. Il comprend plusieurs anneaux magnétiques 4A identiques; il peut éventuellement être constitué par un enroulement de spires en hélice 4B, représenté en traits interrompus sur la figure. Les spires magnétiques sont enroulées selon une hélice cylindrique. Les anneaux 4A ou les spires magnétiques 4B ont pour axe celui de l'enceinte. Les ions mis en résonance cyclotronique parcourent, da façon connue, des trajectoires en hélices, définies par leur rayon de giration dit «rayon de Larmor».

Le dispositif comprend aussi un ensemble de collection 6 formé de plaques conductrices parallèles à l'axe z de l'enceinte. Cet ensemble situé dans l'enceinte, en aval de l'ensemble magnétique 4, permet de façon connue, de recueillir les ions résonnants issus de l'ensemble magnétique 4. Pour des ions positifs, les plaques de l'ensemble 6 peuvent être portées à un potentiel négatif $V_2$, par une source électrique non représentée. Réciproquement, pour des ions négatifs, les plaques parallèles sont portées à un potentiel positif $V_2$. Une grille de freinage 7 peut être placée entre l'ensemble magnétique 4 et les plaques 6 de collection des ions résonnants. Dans le cas d'ions positifs, la grille de freinage 7 est portée à un potentiel positif $V_3$, par une source électrique non représentée. Cette grille de freinage est portée à un potentiel négatif, lorsque les ions résonnants issus de l'ensemble magnétique 4, sont des ions négatifs.

Enfin, le dispositif comporte une plaque collectrice 8 située dans l'enceinte, en aval de l'ensemble des plaques 6. Cette plaque de collection, perpendiculaire à l'axe z de l'enceinte, permet de recueillir les ions non résonnants qui n'ont pas été retenues par l'ensemble de plaques parallèles 6. Dans le cas d'ions négatifs, la plaque collectrice 8 est portée à un potentiel $V_4$ positif, tandis que dans le cas d'ions positifs, cette plaque 8 est portée à un potentiel négatif.

Selon l'invention, on définit un pas P(z) entre deux anneaux successifs ou entre deux spires successives de l'enroulement en hélice de la structure magnétique 4.

Les anneaux ou l'enroulement magnétique en hélice peuvent être constitués par des aimants ayant la forme d'anneau ou par un aimant ayant la forme d'une hélice. Ces anneaux ou cet enroulement en hélice peuvent également être constitués par des aimants supraconducteurs ou par des bobinages électromagnétiques.

Selon l'invention , le pas P(z) entre deux anneaux ou deux spires successives de l'ensemble magnétique n'est plus un pas constant, mais ce pas est variable pour produire un champ magnétique modulé tenant compte à la fois de la vitesse perpendiculaire initiale $(V_{\perp o})$ et de la vitesse parallèle initiale $V_{//o}$ des ions issus de la source.

Ce pas P(z) est donné par la formule:

$$P(z) = \lambda_o \left[ 1 + (V_{\perp o}/V_{//o})^2 (1 - Ch^2 (\varepsilon \cdot k_o \cdot z/4)) \right]^{+1/2}$$

Dans cette relation:

— P(z) désigne le pas entre deux anneaux ou deux spires successives pour un point d'ordonnée z, le long de l'axe de l'enceinte. L'origine des abscisses z sur cet axe est prise au point d'intersection de l'axe de l'enceinte avec un plan P perpendiculaire à cet axe et délimitant l'ensemble magnétique, à une extrémité de celui-ci, du côté de la source. Cette origine désignée par O sur la figure est en fait l'intersection du Plan P passant par la face du premier anneau ou de la première spire de la structure magnétique 4, en regard de la source 2, et de l'axe z.

— Le terme $V_{\perp o}$ désigne une vitesse prédéterminée moyenne des ions résonnants dans une direction perpendiculaire à leur rayon de giration, conformément à l'invention (cette direction est perpendiculaire à l'axe z).

— $V_{//o}$ désigne une vitesse prédéterminée moyenne des ions résonnants dans une direction parallèle à l'axe z de l'enceinte.

— Les termes $\varepsilon$, $k_o$ et $\lambda_o$ ont été définis plus haut.

Avec un ensemble magnétique présentant cette structure, le chauffage des ions résonnants est beaucoup plus efficace.

Les plaques parallèles de l'ensemble de collection 6, qui permettent de recueillir les ions résonnants sont écartées d'une distance voisine mais inférieure à deux fois le rayon de giration des ions résonnants issus de l'ensemble magnétique. En effet, les ions résonnants décrivant des hélices, il est nécessaire pour que ces ions puissent être captés par les plaques, que celles-ci soient espacées d'une distance voisine du diamètre de cette hélice à la sortie de l'ensemble magnétique.

L'ensemble de collection 6 peut être également constitué par des tubes conducteurs coaxiaux, espacés entre eux d'une distance voisine mais inférieure au double du rayon de giration des ions résonnants.

Les plaques, ou les tubes coaxiaux de l'ensemble de collection 6 sont portés à un potentiel retardateur, pour améliorer l'effet séparateur du dispositif. Ces plaques ou ces tubes conducteurs doivent être de très faible épaisseur.

La longueur $\ell$ des plaques ou des tubes coaxiaux de l'ensemble 6 est voisine de $2\pi \cdot V_{//} / \Omega_{co}$, $V_{//}$ désignant la vitesse des ions résonnants à leur sortie de l'ensemble magnétique 4. En effet, si cette longueur est inférieure à cette valeur, certains des ions résonnants peuvent ne pas être captés par les plaques ou cylindres coaxiaux de l'ensemble 6.

Les ions non résonnants passent au travers de l'ensemble de plaques ou tubes coaxiaux 6 et sont collectés sur la plaque 8 qui est perpendiculaire à l'axe z de l'enceinte, et donc perpendiculaire au champ magnétique créé par l'ensemble 4.

Toutes les plaques ou tubes coaxiaux de l'ensemble de collection 6 peuvent être en carbone afin de minimiser les phénomènes de pulvérisation et peuvent être portées à une température permettant d'assurer une bonne adhésion des ions résonnants collectés.

Le dispositif peut également permettre d'effectuer des analyses de masse. Dans ce cas, on recueille le signal apparaissant entre deux plaques ou deux tubes coaxiaux consécutifs. Ce signal est amplifié puis analysé ensuite en série de Fourier selon des méthodes connues.

Dans un exemple d'application, le dispositif peut être utilisé dans la séparation des ions monochargés des isotopes $^{36}Ar$ et $^{40}Ar$ de l'argon.

Pour les ions de $^{36}Ar$, $V_{//o} = 20\,000$ m/s et $V_{\perp o} = 2000$ m/s.

Pour les ions de $^{40}Ar$, $V_{//o} = 18\,970$ m/s et $V_{\perp o} = 1897$ m/s.

Ces ions ont une densité ionique voisine de $10^{12}$ cm$^{-3}$ et pénètrent dans un ensemble magnétique tel que $k = 62,84$ m$^{-1}$ et $\varepsilon = 0,15$. Après un parcours de un mètre cinquante environ et une quinzaine de tours, le rayon de giration de l'ion résonnant s'accroît d'un facteur 17 environ, tandis que le rayon de giration de l'ion non résonnant ne s'accroît en moyenne que d'un facteur 2. La pulsation cyclotronique a une valeur de $12,56 \cdot 10^5$ rd/s, correspondant à une fréquence de 200 kHz et à une valeur moyenne du champ magnétique de 0,47 Tesla.

Avec ces valeurs, le rapport de la fraction molaire de l'Argon 36 à celle de l'Argon 40 est de l'ordre de 8,5 alors que le rapport des concentrations initiales vaut $0,0034/0,9966 \sim 3,4 \cdot 10^{-3}$, soit un facteur de séparation purement géométrique de l'ordre de 10. Ce facteur de séparation peut être amélioré d'un facteur cinq en appliquant un potentiel retardateur sur les plaques ou tubes de collection de l'ensemble 6.

Dans un autre exemple d'application, le dispositif peut être utilisé dans la séparation des ions monochargés des isotopes $K^{39}$ et $K^{41}$ du potassium. Pour les ions de $K^{41}$, $V_{//o} = 18790$ m/s et $V_{\perp o} = 1879$ m/s. Pour les ions de $K^{39}$, $V_{//o} = 19260$ m/s et $V_{\perp o} = 1926$ m/s. Ces ions pénètrent dans un ensemble magnétique tel que $k_o = 62,62$ m et $\varepsilon = 0,075$. Après un parcours de 2,8 m environ et 28 tours, le rayon de giration de l'ion résonnant s'accroît d'un facteur 6. La pulsation cyclotronique a une valeur de $1,176 \cdot 10^6$ rd/s, correspondant à une fréquence de 187 kHz et à une valeur moyenne du champ magnétique de 0,5 Tesla. Le facteur de séparation purement géométrique est de l'ordre de 6.

**Revendications**

1. Dispositif de séparation isotopique ou d'analyse de masses, par un champ magnétique comportant une enceinte étanche (1) et, d'amont en aval d'un axe (z) de cette enceinte, une source d'ions (2) d'un mélange d'isotopes située dans l'enceinte, une grille accélératrice (3) située dans l'enceinte (1) en regard de la source (2) en aval de celle-ci pour accélérer les ions provenant de cette source, un ensemble magnétique (4) entourant l'enceinte pour la mise en résonance cyclotronique des ions de l'un des isotopes du mélange, cet ensemble magnétique étant situé sur le parcours des ions en aval de la grille accélératrice (3), cet ensemble magnétique (4) comprenant plusieurs anneaux magnétiques identiques (4A) ou étant constitué par un enroulement de spires (4B) magnétiques en hélice cylindrique, ces anneaux ou cet enroulement ayant pour axe celui de l'enceinte, les ions mis en résonance cyclotronique parcourant des hélices de rayon de giration dit de Larmor croissant, un ensemble (6) de collection des ions résonnants situé dans l'enceinte, en aval de l'ensemble magnétique (4) pour recueillir les ions résonnants issus de l'ensemble magnétique (6) et une plaque collectrice (8) dans l'enceinte, en aval de l'ensemble (6) de collection et perpendiculaire à l'axe, pour recueillir les ions non résonnants qui n'ont pas été retenus par l'ensemble (6) de collection, caractérisé en ce que le pas entre deux spires successives (4B) de l'hélice ou entre deux anneaux (4A) de l'ensemble magnétique est déterminé par la relation:

$$P(z) = \lambda_o \left[ 1 + (V_{\perp o}/V_{//o})^2 \left(1 - Ch^2 (\varepsilon \cdot k_o \cdot z/4)\right) \right]^{+1/2}$$

P(z) désigne le pas entre deux anneaux successifs ou deux spires successives entourant le point d'abscisse z sur l'axe de l'enceinte (1), l'origine des abscisses étant l'intersection de l'axe (3) de l'enceinte (1) avec un plan (P) perpendiculaire à cet axe et délimitant l'ensemble magnétique (6) à une extrémité de celui-ci, du côté de la source (2), $V_{\perp o}$ désigne une vitesse prédéterminée moyenne des ions résonnants dans une direction perpendiculaire à l'axe (z), $V_{//o}$ désigne une vitesse prédéterminée moyenne des ions résonnants dans une direction parallèle à l'axe

de l'enceinte, $\varepsilon$ la demi-amplitude de la variation maximum de la composante du champ magnétique parallèle à l'axe, autour de l'amplitude moyenne $B_o$ de ce champ, $k_o$ désigne une constante définie par la relation $k_o = \Omega_{co} /V_{//o}$, $\Omega_{co}$ étant la pulsation cyclotron des ions résonnants, $\lambda_o = 2 \pi/K_o$ et Ch désigne le cosinus hyperbolique.

2. Ensemble selon la revendication 1, caractérisé en ce que l'ensemble (6) de collection des ions résonnants comporte des plaques parallèles à l'axe, deux plaques parallèles consécutives étant écartées d'une distance radiale voisine mais inférieure à deux fois le rayon de giration des ions résonnants issus de l'ensemble magnétique (4).

3. Ensemble selon la revendication 1, caractérisé en ce que l'ensemble (6) de collection des ions résonnants comporte des tubes cylindriques coaxiaux ayant le même axe que celui de l'enceinte (1), deux tubes consecutifs étant écartés d'une distance radiale voisine mais inférieure à deux fois le rayon de giration des ions résonnants issus de l'ensemble magnétique.

4. Ensemble selon l'une des revendications 2 et 3, caractérisé en ce que la longueur des plaques de l'ensemble de collection (6), dans la direction de l'axe, est voisine mais supérieure à $2 \pi \cdot V_{//}/\Omega_{co}$, $V_{//}$ désignant la vitesse des ions résonnants issus de l'ensemble magnétique (4).

5. Dispositif selon la revendication 1, caractérisé en ce qu'il comporte en outre une grille (7) de freinage des ions résonnants, située entre l'ensemble magnétique (4) et l'ensemble de collection (6) des ions résonnants.

**Patentansprüche**

1. Vorrichtung zur Isotopentrennung oder zur Massenanalyse mit Hilfe eines Magnetfeldes, mit einer dichten Hülle (1) und mit, von oberhalb nach unterhalb einer Achse (z) dieser Hülle, einer Ionenquelle (2) einer in der Hülle angeordneten Isotopenmischung; einem Beschleunigungsgitter (3), das in der Hülle (1) bezüglich der Quelle (2) unterhalb dieser angeordnet ist, um die aus dieser Quelle herrührenden Ionen zu beschleunigen; einer magnetischen Anordnung (4), die die Hülle umgibt, um die Ionen eines der Isotope der Mischung in Zyklotronresonanz zu bringen, wobei sich diese magnetische Anordnung auf der Bahn der Ionen unterhalb des Beschleunigungsgitters (3) befindet, wobei diese magnetische Anordnung (4) mehrere identische magnetische Ringe (4A) aufweist oder aus einer Wicklung von magnetischen Wicklungen (4B) in einer zylindrischen Spirale besteht, wobei diese Ringe oder diese Wicklung zur Achse die der Hülle haben, wobei die in Zyklotronresonanz gebrachten Ionen die Spiralen in Kreiselbahnen, den sogenannten Lermorbahnen, durchlaufen; einer Sammelanordnung (6) für resonante Ionen, die sich in der Hülle unterhalb der magnetischen Anordnung (4) befindet, zum Sammeln der von der magnetischen Anordnung herrührenden resonanten Ionen, und einer Sammelplatte (8) in der Hülle unterhalb der Sammelanordnung (6) und senkrecht zur Achse, zum Sammeln der nicht-resonanten Ionen, die nicht

von der Sammelanordnung (6) zurückgehalten wurden, dadurch gekennzeichnet, daß der Abstand zwischen zwei sukzessiven Windungen (4B) der Spirale oder zwischen zwei Ringen (4A) der magnetischen Anordnung bestimmt wird durch die Beziehung:

$$P(z) = \lambda_o \left[ 1 + (V_o/V_{//o})^2 (1 - Ch^2 (\varepsilon \cdot k_o \cdot z/4)) \right]^{+1/2}$$

wobei P(z) den Abstand zwischen zwei sukzessiven Ringen oder zwei sukzessiven Windungen , die die Spitze der Abzisse z au der Achse der Hülle (1) umgeben, bezeichnet, wobei der Ursprung der Abzissen der Schnittpunkt der Achse (3) der Hülle (1) mit einer Ebene (P) senkrecht zu dieser Achse, die die magnetische Anordnung (6) an einer ihrer Außenseiten an der Seite der Quelle (2) begrenzt, ist; $V_{\perp o}$ bezeichnet eine vorgegebene mittlere Geschwindigkeit der resonanten Ionen in einer Richtung senkrecht zur Achse (z), $V_{//o}$ bezeichnet eine vorgegebene mittlere Geschwindigkeit der resonanten Ionen in einer Richtung parallel zur Achse der Hülle, $\varepsilon$ bezeichnet die Halb-Amplitude der maximalen Veränderung der magnetischen Feldkomponente parallel zur Achse, um die mittlere Feldamplitude $B_o$, $k_o$ bezeichnet eine durch die Beziehung $k_o = \Omega_{co}/V_{//o}$ bestimmte Konstante, wobei $\Omega_{co}$ die Zyklotronfrequenz der resonanten Ionen ist, $\lambda_o = 2\pi/k_o$ und Ch bezeichnet den Kosinus hyperbolicus.

2. Anordnung nach Anspruch 1, dadurch gekennzeichnet, daß die Sammelanordnung (6) der resonanten Ionen zur Achse parallele Platten aufweist, wobei zwei aufeinanderfolgende parallele Platten um einen radialen Abstand in der Nähe aber niedriger als zweimal die Kreiselbahn der resonanten Ionen, die aus der magnetischen Anordnung (4) herrühren, entfernt sind.

3. Anordnung nach Anspruch 1, dadurch gekennzeichnet, daß die Sammelanordnung (6) der resonanten Ionen koaxiale, zylindrische Röhren aufweist, die dieselbe Achse haben wie die Hülle (1), wobei zwei aufeinanderfolgende Röhren um einen radialen Abstand in der Nähe aber niedriger als zweimal die Kreiselbahn der resonanten Ionen, die aus der magnetischen Anordnung (4) herrühren, entfernt sind.

4. Anordnung nach einem der Ansprüche 2 und 3, dadurch gekennzeichnet, daß die Länge der Platten der Sammelanordnung (6) in Achsrichtung in der Nähe aber oberhalb von $2\pi V_{//}/\Omega_{co}$ liegt, wobei $V_{//}$ die Geschwindigkeit der von der magnetischen Anordnung (4) herrührenden Ionen bezeichnet.

5. Anordnung nach Anspruch 1, dadurch gekennzeichnet, daß sie außerdem ein Bremsgitter (7) für die resonanten Ionen aufweist, das sich zwischen der magnetischen Anordnung (4) und der Sammelanordnung (6) der resonanten Ionen befindet.

**Claims**

1. Apparatus for isotope separation by a magnetic field having a tight enclosure (1) and from upstream to downstream of an axis (z) of said enclosure, an ion source (2) of a mixture of isotopes located in the enclosure, an accelerating grid (3) located in the enclosure (1) facing the source (2) downstream thereof for accelerating the ions from said source, a magnetic assembly (4) surrounding the enclosure for bringing into cyclotron resonance the ions of one of the isotopes of the mixture, said magnetic assembly being located on the path of the ions downstream of the accelerating grid (3), whereby said magnetic assembly (4) comprises several identical magnetic rings (4A), all being constituted by a cylindrical helical winding of magnetic turns (4B), said rings or said winding having as its axis that of the enclosure, the ions brought into cyclotron resonance passing through circular helixes defined by their radius of gyration, called the Larmor radius, a resonant ion collecting assembly (6) located in the enclosure downstream of the magnetic assembly (4) for collecting the resonant ions from the magnetic assembly and a collecting plate in the enclosure, downstream of the collecting assembly (6) and perpendicular to the axis, for collecting the non-resonant ions which have not been retained by the collecting assembly (6), characterized in that the spacing between two successive turns of the helix or between two rings of the magnetic assembly is determined by the relation:

$$P(z) = \lambda_o \left[ 1 + (V_o/V_{//o})^2 (1 - Ch^2 (\varepsilon \cdot k_o \cdot z/4)) \right]^{+1/2}$$

P(z) designating the spacing between two successive turns or two successive rings surrounding the abscissa point z on the axis of the enclosure, the origin of the abscissas being the intersection of the axis of the enclosure with a plane perpendicular to said axis and defining the magnetic assembly at one end thereof on the side of the source, $V_{\perp o}$ designating a predetermined means velocity of the resonant ions in a direction perpendicular to the axis (z), $V_{//o}$ designating the predetermined mean velocity of the resonant ions in a direction parallel to the axis of the enclosure, the half-amplitude of the maximum variation of the component of the magnetic field parallel to the axis, about the mean amplitude $B_o$ of said field, $k_o$ designating a constant defined by the relation $k_o = \Omega_{co}/V_{//o}$ and $\Omega_{co}$ being the cyclotron pulsation of the resonant ions, $\lambda_o = 2\pi/K_o$ and Ch designating the hyperbolic cosine.

2. Apparatus according to claim 1, characterized in that the resonant ion collecting assembly (6) comprises plates parallel to the axis, two consecutive parallel plates being spaced by a radial distance close to, but less than twice the gyration radius of the resonant ions from the magnetic assembly (4).

3. Apparatus according to claim 1, characterized in that the resonant ion collecting assembly (6) comprises coaxial cylindrical tubes having the same axis as the enclosure (1), two consecutive tubes being spaced by a distance close to, but less than twice the gyration radius of the resonant ions from the magnetic assembly.

4. Apparatus according to one of the claims 2 and 3, characterized in that the length of the plates of the collecting assembly (6), in the direction of the axis, is close to, but greater than $2\pi \cdot V_{//}\Omega_{co}$, $V_{//}$ designating the velocity of the resonant ions from the magnetic assembly (4).

5. Apparatus according to claim 1, characterized in that it also comprises a grid (7) for decelerating the resonant ions located between the magnetic assembly (4) and the resonant ion collecting assembly (6).

EP 0 244 297 B1